# EUROPÄISCHE PATENTSCHRIFT

(11) **EP 2 307 473 B1**
(45) Veröffentlichungstag und Bekanntmachung des Hinweises auf die Patenterteilung: **21.01.2015**
(21) Anmeldenummer: 09777140.6
(22) Anmeldetag: 11.07.2009
(51) Int. Cl.: C08G 18/08, C08G 18/67, C08G 18/81, B01F 5/06, B01J 19/00, C09D 175/16

(54) **VERFAHREN ZUR HERSTELLUNG VON STRAHLUNGSHÄRTBAREN, URETHANGRUPPEN ENTHALTENDEN PRÄPOLYMEREN**
METHOD FOR PRODUCING RADIATION-HARDENABLE PREPOLYMERS CONTAINING URETHANE GROUPS
PROCÉDÉ POUR PRODUIRE DES PRÉPOLYMÈRES DURCISSABLES PAR RAYONNEMENT CONTENANT DES GROUPEMENTS URÉTHANE

(30) Priorität: 24.07.2008 DE 102008034473
(43) Veröffentlichungstag der Anmeldung: 13.04.2011
(73) Patentinhaber: Allnex IP S.à.r.l., 1660 Luxembourg (LU)
(72) Erfinder: HENNINGER, Björn, 50677 Köln (DE); TRACHT, Ursula, 51379 Leverkusen (DE); BUCHHOLZ, Sigurd, 50767 Köln (DE); WILLEMS, Claudia, 51373 Leverkusen (DE); BACHMANN, Rolf, 51469 Bergisch Gladbach (DE); LUDEWIG, Michael, 51373 Leverkusen (DE); FISCHER, Wolfgang, 40668 Meerbusch (DE)
(74) Vertreter: Destryker, Elise Martine
(86) Internationale Anmeldenummer: PCT/EP2009/005061
(87) Internationale Veröffentlichungsnummer: WO 2010/009821

(56) Entgegenhaltungen:
- WO-A1-2007/090680
- DE-A1- 10 331 672
- US-A1- 2006 241 242

## Beschreibung

Die Erfindung betrifft ein Verfahren zur Herstellung von strahlungshärtbaren, Urethangruppen enthaltenden Präpolymeren und die Verwendung der durch dieses Verfahren gewonnenen Produkte als mit aktinischer Strahlung und / oder thermisch radikalisch härtbare Materialien.

Strahlungshärtbare Urethangruppen enthaltende Präpolymere finden in der Technik eine breite Anwendung, beispielsweise in Photoresists und als Komponenten in hochwertigen Beschichtungsmaterialien. Sie weisen ethylenisch ungesättigte Doppelbindungen auf, die unter Einwirkung energiereicher Strahlung, beispielsweise UV-Licht oder Elektronenstrahlung, polymerisieren und ein hochmolekulares Netzwerk bilden. Beschichtungen auf der Basis von strahlungshärtbaren, Urethangruppen enthaltenden Präpolymeren zeichnen sich in der Regel durch eine hohe Widerstandsfähigkeit gegenüber mechanischen oder chemischen Einflüssen aus.

Einen Überblick über ethylenisch ungesättigte, Urethangruppen enthaltende Präpolymere findet sich beispielsweise in P. K. T. Oldring (Hrsg.), Chemistry and Technology of UV- and EB-Formulations for Coatings, Inks and Paints, Vol. II, SITA Technology, London, 1991, S. 73-123.

Unter den strahlungshärtenden, Urethangruppen enthaltenden Präpolymeren sind vor allem Urethanacrylate und ihre vielfältigen Einsatzmöglichkeiten zu nennen.

In WO 2007090680 A1 sind Urethanacrylate beschrieben, die als strahlungs- und / oder thermisch radikalisch härtbare Materialien für die Herstellung von neuen duroplastischen Materialien eingesetzt werden, insbesondere als Beschichtungsstoffe, Klebstoffe, Dichtungsmassen und Vorstufen für Folien und Formteile. In DE 2115373 A1 werden Urethanacrylate beschrieben, die als Materialien für die Herstellung flexographischer Druckplatten eingesetzt werden.

Die Herstellung von Urethanacrylaten erfolgt in Abhängigkeit des gewünschten Zielprodukts auf verschiedene Arten.

In DE 1644798 A1 ist die Umsetzung von Tolylendiisocyanat mit 2-Hydroxyethylacrylat zur Herstellung eines Urethanacrylats beschrieben. Hierbei wird das Hydroxyalkylacrylat bevorzugt in einem Lösemittel vorgelegt und das Isocyanat unter Rühren zugegeben, wobei die Zugabe mit einer solchen Geschwindigkeit erfolgen sollte, dass die exotherme Reaktion eine Temperatur von etwa 32° C nicht übersteigt.

In DE 2115373 A1 ist ebenfalls eine diskontinuierliche Synthese für ein Urethanacrylat beschrieben, die in zwei Schritten verläuft: im ersten Schritt wird ein Überschuss an Diisocyanat mit einem Polyetherpolyol zum Polyurethan umgesetzt. Im Zweiten Schritt erfolgt die Zugabe eines Hydroxyalkylacrylats, das mit nicht reagierten Isocyanatgruppen umgesetzt wird. Es ist beschrieben, dass bei der Umsetzung unnötig hohe Temperaturen zu vermeiden sind, um Folgereaktionen, insbesondere der ungesättigten Doppelbindungen zu vermeiden. Dementsprechend lang sind die Reaktionszeiten von mehreren Stunden.

In US 6569944 B2 ist beschrieben, dass die Synthese von viskosen Urethanacrylaten oftmals in Lösemitteln durchgeführt wird. Bei Temperaturen unter 120°C seien die Reaktionskomponenten zu viskos und bei Temperaturen oberhalb von 100 bis 120°C bestünde das Risiko, dass Verbindungen mit Acrylat-Gruppen spontan polymerisieren. Die hohe Viskosität von Edukten und Produkten führt zu einer schlechten Durchmischung. Die Exothermie der Reaktion kann somit zum Auftreten so genannter Hot Spots führen, was im günstigsten Fall zu uneinheitlichen und nicht reproduzierbaren Produkten führt, was im ungünstigsten Fall jedoch das Durchgehen der Reaktion im Sinne einer ungewollten Polymerisation bedeuten kann.

Weiterhin ist bekannt, dass Acrylat-Gruppen enthaltende Präpolymere scherempfindlich sind und eine spontane Polymerisation durch mechanische Belastung auftreten kann (siehe z.B. EP 1 293 547 B1).

Insofern unterliegt die Synthese von Urethanacrylaten einer Reihe von Anforderungen, die einer schnellen und unkomplizierten Herstellung entgegenstehen. Es wäre wünschenswert, die Synthese von Urethanacrylaten bei höheren Temperaturen durchführen zu können, um die Reaktionszeit zu verkürzen. Hier besteht aber die Gefahr, dass Folgereaktionen, insbesondere die radikalische Polymerisation der ungesättigten Doppelbindung des Acrylats einsetzt. Weiterhin wäre eine kontinuierliche Verfahrensweise von wirtschaftlichem Vorteil, um Reaktorstillzeiten infolge von Befüllungs- und Entleerungsprozessen und lange Reaktionszeiten infolge sicherheitstechnischer Vorgaben, reaktorspezifischer Wärmetauschleistungen als auch Aufheiz- und Abkühlungsprozesse zu vermeiden.

In DE 10331672 A1 ist ein einstufiges kontinuierliches Verfahren zur Herstellung eines Urethanacrylats beschrieben, in dem IPDI (1-Isocyanato-3-Isocyanato-3,5,5-trimethylcyclohexan) mit 2-Hydroxypropylacrylat in einem statischen Mischer umgesetzt wird. Laut Beispiel 4 resultierte ein Produkt mit einem Rest-NCO-Gehalt von 1,4%, einem Restgehalt an freiem IPDI von 0,09% und einem Gehalt an freiem 2-Hydroxypropylacrylat von 1,7%. Während des gesamten Versuchsverlaufs wurden starke Druckschwankungen im Reaktor beobachtet, die eine ruhige kontinuierliche Fahrweise nicht ermöglichten. Der hohe Restgehalt an 2-Hydroxypropylacrylat ist bedenklich, da er Mensch und Umwelt beeinträchtigt. Auch die Änderung der Verfahrensparameter und variable Zugabemengen an Katalysator führten zu keiner Abhilfe, sodass das Fazit gezogen wurde, dass die Herstellung eines ethylenisch ungesättigten Polyurethans mittels eines einstufigen, kontinuierlichen Prozesses nicht reproduzierbar möglich sei.

US 2006/0241242 offenbart ein Verfahren zur Herstellung von Polymeren. Das Verfahren umfasst einen Schritt bei dem das Copolymer, das vom Polymerisationsreaktor gesammelt wird, danach mit mindestens einem Reaktanten umgesetzt wird, durch den eine ethylenisch ungesättigte Gruppe eingeführt wird.

Die Synthese von Urethanacrylaten wird technisch häufig katalysiert durchgeführt. Der Katalysator senkt die Aktivierungsenergie für die Additionsreaktion der Hydroxy-Komponente mit der Isocyanat-Komponente, sodass die Reaktion bei niedrigeren Temperaturen - und damit hinsichtlich der möglichen Polymerisation technisch sicherer - durchgeführt werden kann. Es ist bekannt, dass die Umsetzung von Diisocyanaten mit unterschiedlich reaktiven Isocyanatgruppen wie z.B. in IPDI mit Alkoholen durch geeignete Katalysatoren wie z.B. Dibutylzinndilaurat bei Temperaturen unter 100°C, bevorzugt unter 65°C mit erhöhter Selektivität durchgeführt werden kann (DE 103 31 672 A1).

Weiterhin ist es von Vorteil, wenn die synthetisierten strahlungshärtbaren, Urethangruppen enthaltenden Präpolymere über eine geringe Viskosität verfügen. In diesem Fall lassen sie sich einfach weiterverarbeiten und verwenden / applizieren. Insbesondere ist es möglich, auf reaktive Verdünner und/oder auf Lösemittel zur Verdünnung bei der Weiterverarbeitung und / oder Verwendung weitestgehend zu verzichten. Bei Einsatz der strahlungshärtbaren, Urethangruppen enthaltenden Präpolymere als Beschichtungsmittel muss das Lösemittel entfernt werden, reaktive Verdünner verbleiben im Produkt. In jedem Fall wird der Produzent von Beschichtungsmaterialien in den Möglichkeiten der Formulierungsvielfalt eingeschränkt, so dass es wünschenswert wäre, Produkte mit geringerer Viskosität bei gleichbleibenden Eigenschaften hinsichtlich der Verwendung in Beschichtungsmittel zu erzeugen. Dieses gelingt vorwiegend durch den Einsatz von diskontinuierlichen Verfahren, die unter Inkaufnahme langer Kesselbelegungszeiten durch die sorgsam kontrollierte, langsame Dosierung der Edukte unter strikter Einhaltung definierter Temperaturen geführt werden.

Ausgehend vom Stand der Technik stellt sich somit die Aufgabe, ein kontinuierliches Verfahren zur Herstellung von strahlungshärtbaren, Urethangruppen enthaltenden Präpolymeren - kurz als Präpolymere bezeichnet - bereitzustellen, das sowohl unter Verwendung von Lösemitteln als auch lösemittelfrei und zusätzlich sowohl katalysiert als auch unkatalysiert durchgeführt werden kann. Es stellt sich weiterhin die Aufgabe, ein Verfahren zur Herstellung der genannten Präpolymere bereitzustellen, das wirtschaftlich und in technischem Maßstab durchgeführt werden kann. Es stellt sich ferner die Aufgabe ein Verfahren bereitzustellen, das die hohe Produktqualität der über diskontinuierliche Verfahren hergestellten Präpolymere mit der höheren Raum-Zeit-Ausbeute von kontinuierlichen Verfahren vereint.

Gegenstand der Erfindung ist daher ein Verfahren zur kontinuierlichen Herstellung von strahlenhärtbaren, Urethangruppen enthaltenden Präpolymeren dadurch gekennzeichnet, dass mindestens zwei Komponenten zunächst gemischt und anschließend durch eine Verweilstrecke geführt werden, wobei eine der mindestens zwei Komponenten eine oder mehrere Verbindungen mit mindestens einer Isocyanatgruppe pro Molekül umfasst, während die andere der mindestens zwei Komponenten eine oder mehrere Verbindungen mit mindestens einer isocyanatreaktiven Gruppe sowie mindestens einer ethylenisch ungesättigten Doppelbindung pro Molekül umfasst.

Kontinuierliche Reaktionen im Sinne der Erfindung sind solche, bei denen der Zulauf der Edukte in den Reaktor und der Austrag der Produkte aus dem Reaktor gleichzeitig aber räumlich getrennt stattfinden, während bei diskontinuierlicher Reaktion die Reaktionsfolge Zulauf der Edukte, chemische Umsetzung und Austrag der Produkte zeitlich nacheinander ablaufen.

Die Komponenten können weitere Verbindungen wie z.B. Lösemittel, Reaktivverdünner, Hilfsmittel und / oder Katalysatoren enthalten.

Zusätzlich ist die Zuführung weiterer Komponenten entlang der Verweilstrecke möglich. Die weiteren Komponenten können ihrerseits wiederum eine oder mehrere Verbindungen mit isocyanatreaktiven Gruppen und / oder Isocyanatgruppen umfassen.

Entlang der Verweilstrecke erfolgt die Umsetzung der Isocyanatgruppen mit den isocyanatreaktiven Gruppen unter Ausbildung von Urethangruppen. Die kontinuierliche Umsetzung erfolgt in einer bevorzugten Ausführungsform unter der Verwendung mindestens einer Mischeinheit und einer Verweilstrecke unter Druck von 0-30 bar, bevorzugt von 0-10 bar, besonders bevorzugt im Bereich von 0-4 bar und bei Temperaturen von +20 bis +200°C, bevorzugt im Bereich von +80 bis +160°C und insbesondere bei +90 bis +120°C.

Die Dosiergeschwindigkeiten hängen in erster Linie von den gewünschten Verweilzeiten bzw. zu erreichenden Umsätzen ab. Je höher die maximale Reaktionstemperatur, desto kürzer sollte die Verweilzeit sein. In der Regel haben die Reaktionspartner in der Reaktionszone Verweilzeiten zwischen 20 Sekunden (20 sek.) und 120 Minuten (120 min.), bevorzugt zwischen 90 sek. und 90 min., ganz besonders bevorzugt zwischen 5 min und 60 min. Hierbei haben die unkatalysiert durchgeführten Reaktionen in der Regel eine deutlich höhere Verweilzeit als die katalysiert durchgeführten Reaktionen. Es ist jedoch darauf hinzuweisen, dass das erfindungsgemäße Verfahren sowohl katalysiert als auch unkatalysiert durchgeführt werden kann.

Die Verweilzeit kann beispielsweise durch die Volumenströme und das Volumen der Reaktionszone gesteuert werden. Der Reaktionsverlauf wird vorteilhaft durch verschiedene Messeinrichtungen- verfolgt. Dazu geeignet sind insbesondere Einrichtungen zur Messung der Temperatur, der Viskosität, der Wärmeleitfähigkeit und / oder des Brechungsindex in strömenden Medien und / oder zur Messung von Infrarot- und/oder Nahinfrarotspektren.

Die erfindungsgemäß zu verwendenden Reaktionsstrecken zeichnen sich insbesondere durch ihre hohe Wärmeübertragungsleistung aus, welche durch die spezifische Wärmeübertragungsrate in W/(K·m³) gekennzeichnet sind, also Wärmeübertrag pro Kelvin Temperaturdifferenz zum Wärmeträgermedium bezogen auf das freie Volumen des Reaktors. Demzufolge sind die erfindungsgemäß einzusetzenden Reaktionsstrecken dadurch charakterisiert, dass sie durch ihren Aufbau im erfindungsgemäßen Verfahren a) einen maximalen Druckverlust von 0 bis 30 bar, bevorzugt 0 bis 10 bar und insbesondere bevorzugt 0 bis 4 bar ermöglichen und b) eine Wärmeübertragungsrate von 20 bis 750 kW/(K·m³), bevorzugt 50 bis 500 kW/(K·m³) und besonders bevorzugt 100 bis 300 kW/(K·m³) ermöglichen.

Hier bietet sich beispielsweise die Verwendung der Mikroreaktionstechnik (µ-Reaktionstechnik) unter Einsatz von Mikroreaktoren an. Die verwendete Bezeichnung "Mikroreaktor" steht dabei stellvertretend für mikrostrukturierte, vorzugsweise kontinuierlich arbeitende Reaktoren, die unter der Bezeichnung Mikroreaktor, Minireaktor, Mikrowärmetauscher, Minimischer oder Mikromischer bekannt sind. Beispiele sind Mikroreaktoren, Mikrowärmetauscher, T- und Y-Mischer sowie Mikromischer verschiedenster Firmen (z.B. Ehrfeld Mikrotechnik BTS GmbH, Institut für Mikrotechnik Mainz GmbH, Siemens AG, CPC-Cellulare Process Chemistry Systems GmbH, und anderen), wie sie dem Fachmann allgemein bekannt sind, wobei ein "Mikroreaktor" im Sinne der vorliegenden Erfindung üblicherweise charakteristische/bestimmende innere Abmessungen von bis zu 1 mm aufweist und statische Mischeinbauten enthalten kann.

Ebenso geeignet sind Intensivwärmetauscher, wie z.B. CSE-XR-Typen der Firma Fluitec, sofern sie die oben genannten Eigenschaften hinsichtlich ihrer Wärmeübertragungseigenschaften erfüllen können. Ebenfalls denkbar sind hier Verknüpfungen von Mikroreaktoren mit anderen größer strukturierten Wärmetauschern, wie z.B. der Firma Fluitec oder Sulzer. Wesentliches Merkmal bei diesen Verknüpfungen ist die Anordnung der einzelnen Reaktortypen entsprechend der jeweilig erwarteten, notwendigen Wärmeleistung der einzelnen Apparate unter Berücksichtung der auftretenden Viskositäten bzw. Druckverlusten.

Neben der Wärmeübertragungseigenschaften der Reaktionsstrecke ist ebenfalls eine enge Verweilzeitverteilung im Reaktorsystem von Vorteil, so dass das für den gewünschten Umsatz notwendige Verweilvolumen möglichst klein gehalten werden kann. Erreicht wird dieses üblicherweise durch die Verwendung von statischen Mischelementen oder von µ-Reaktoren, wie oben beschrieben. Typischerweise erfüllen ebenso Intensivwärmetauscher wie z.B. der CSE-XR-Typ diese Anforderung hinreichend.

Die Komponenten werden dem Reaktor in der Regel in getrennten Eduktströmen zudosiert. Bei mehr als zwei Eduktströmen können diese auch gebündelt zugeführt werden. Hydroxylgruppenhaltige Komponenten können zu einem Produktstrom zusammengefasst werden. Es ist auch möglich, diesem Produktstrom zusätzlich Katalysatoren und/oder Zuschlagstoffe wie Verlaufmittel, Stabilisatoren oder Haftvermittler zuzufügen. Ebenso können Mono- oder Polyisocyanat mit einer polymersationsfähigen Verbindung mit mindestens einer freien Hydroxygruppe und einer ethylenisch ungesättigten Doppelbindung zur Reaktion gebracht werden und mit Katalysatoren und/oder Zuschlagstoffen wie Verlaufmittel, Stabilisatoren oder Haftvermittler in einem Eduktstrom zusammengefasst werden. Die Stoffströme können auch geteilt werden und so in unterschiedlichen Anteilen an verschiedenen Stellen dem Reaktor zugeführt werden. Auf diese Weise werden gezielt Konzentrationsgradienten eingestellt, was die Vollständigkeit der Reaktion herbeiführen kann. Die Eintrittsstelle der Stoffströme in der Reihenfolge kann variabel und zeitlich versetzt gehandhabt werden. Zur Vorreaktion und / oder Vervollständigung der Reaktion können mehrere Reaktoren auch kombiniert werden. Gegen Ende der Reaktionsstrecke können gegebenenfalls weitere erwünschte und in der Beschichtungstechnologie übliche Additive zugeführt und eingemischt werden. Vorzugsweise werden die Additive jedoch schon einer Reaktionskomponente vor der eigentlichen Reaktion zugesetzt. Solche Additive sind Photoinitiatoren, Inhibitoren, Lichtschutzmittel wie UV-Absorber und sterisch gehinderte Amine (HALS), weiterhin Antioxidantien, Füllstoffe sowie Lackhilfsmittel, z.B. Antiabsetzmittel, Entlüftungsmittel und / oder Netzmittel, Verlaufsmittel, Reaktivverdünner, Weichmacher, Katalysatoren sowie Pigmente, Farbstoffe und/oder Mattierungsmittel. Der Einsatz von Lichtschutzmitteln und die verschiedenen Typen sind beispielhaft beschrieben in A. Valet, Lichtschutzmittel für Lacke, Vincentz Verlag, Hannover, 1996.

Die Stoffströme können vor der Zusammenführung/Mischung durch einen Wärmetauscher temperiert werden, d.h. auf eine Temperatur von -20 bis +200°C, bevorzugt +10 bis +140°C, besonders bevorzugt +20 bis +120°C gebracht werden. Anschließend werden sie mit einem Intensiv-Mischer vermischt und durch den Reaktor, der ggf. weitere Mischelemente enthält, gefördert. Es ist denkbar, mehrere Reaktoren hintereinander zu schalten. Jeder dieser Reaktoren ist vorteilhaft mit einer Kühl- und / oder Heizvorrichtung z.B. einem Mantel, durch den eine temperierte Wärmeträgerflüssigkeit geleitet wird, versehen.

Durch den Einsatz eines Intensiv-Mischers (µ-Mischer) werden die Reaktionslösungen sehr schnell miteinander vermischt, wodurch ein möglicher radialer Konzentrationsgradient vermieden wird. Vorteilhaft hierbei ist die reduzierte Scherung der Reaktionsmischung bei der Verwendung von Mikroreaktoren/Mikromischern, die bei den scherempfindlichen Acrylaten zu einer sichereren Prozessfahrweise führt und zudem eine erhöhte Produktqualität bedeutet.

Die Verwendung mehrerer unabhängig temperierbarer Heiz-/Kühlzonen ermöglicht es zum Beispiel, das strömende Reaktionsgemisch zu Beginn der Reaktion, also kurz nach dem Vermischen, zu kühlen und freiwerdende Reaktionswärme abzuführen und gegen Ende der Reaktion, also kurz vor dem Austrag aus dem Reaktor, zu heizen, um einen möglichst vollständigen Umsatz zu erreichen. Die Kühl- und Heizmitteltemperatur kann dabei zwischen +25 und +250°C, bevorzugt unter +200°C liegen. Die Temperatur des Reaktionsgemischs wird neben Heizung und / oder Kühlung auch durch die Reaktionswärme beeinflusst. Bei Anwesenheit von ethylenisch ungesättigten Verbindungen ist es zweckmäßig, bestimmte Temperaturobergrenzen nicht zu überschreiten, weil sonst das Risiko einer ungewollten Polymerisation steigt. Für ungesättigte Acrylate sollte die maximale Reaktionstemperatur Werte von +250°C nicht übersteigen. Bevorzugt werden +200°C nicht überschritten.

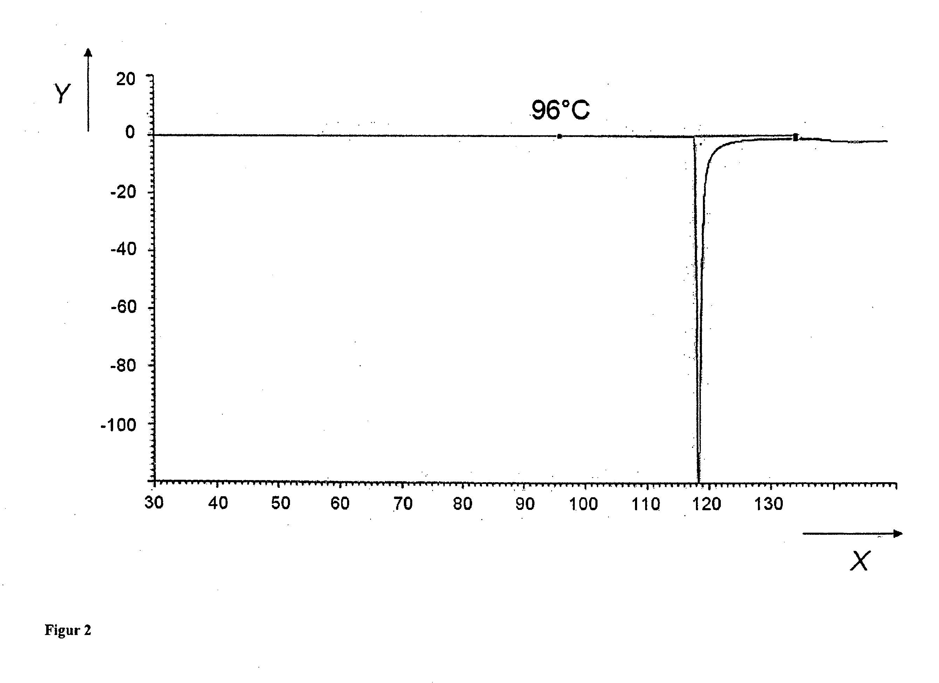

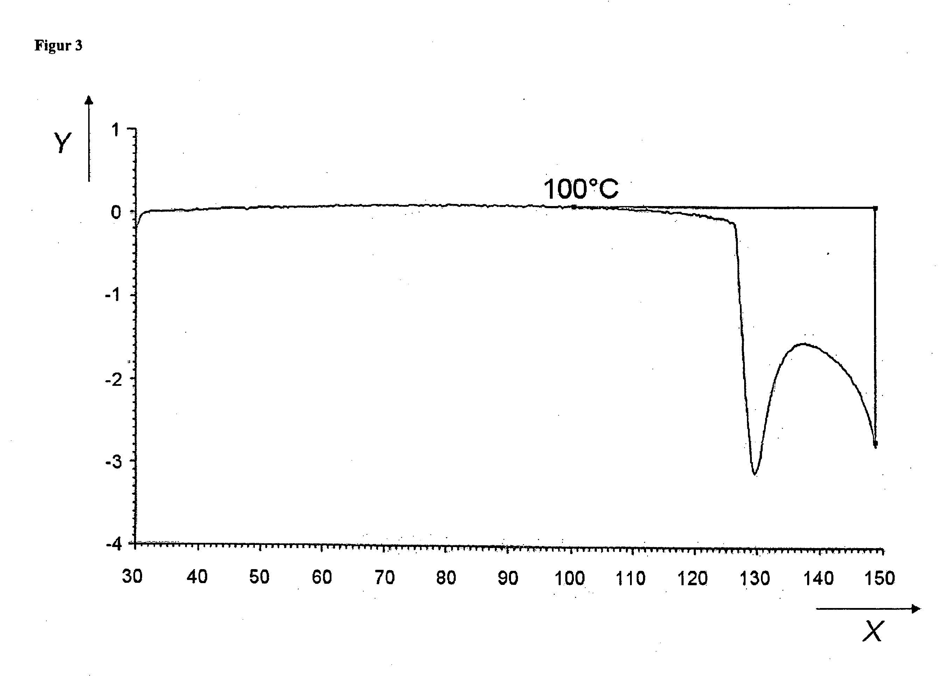

Überraschend wurde gefunden, dass die Reaktion zur Herstellung von strahlungshärtbaren, Urethangruppen enthaltenden Präpolymeren bei Reaktionstemperaturen durchgeführt werden kann (Beispiel 3), bei der mittels DTA (Differentialthermoanalyse) bei den Reaktionskomponenten und / oder Produkten bereits Folge- und / oder Nebenreaktionen in Erscheinung treten. So zeigt z.B. Figur 3 das Ergebnis einer Differentialthermoanalyse des Produktes (Urethanacrylat) aus dem Beispiel 2 (Semi-Batch-Verfahren). Deutlich ist zu erkennen, dass es bereits oberhalb von 100 °C zu Folgereaktionen kommt. Figur 2 zeigt wiederum die DTA der Reaktionsmischung, welche im Semi-Batch-Verfahren (Beispiel 2) vorgelegt wird. Auch hier ist oberhalb von 110°C eine deutliche Exothermie der Folge/Nebenreaktion zu erkennen. Daher wäre zu vermuten, dass es bei einem Verfahren mit Reaktionstemperaturen oberhalb von 100°C zu diesen ungewünschten Folge/Nebenreaktionen kommen könnte. Überraschend wurde jedoch mit dem erfindungsgemäßen Verfahren bei einer Temperatur von 110°C ein Produkt in hoher Qualität erhalten (Beispiel 3). In einer besonderen Ausführungsform des erfindungsgemäßen Verfahrens wird die Herstellung von strahlenhärtbaren, Urethangruppen enthaltenden Präpolymeren in einem Temperaturbereich durchgeführt, bei dem mittels DTA bereits erste Anzeichen einer Reaktion bei einem Edukt oder mehreren einzelnen Edukten und / oder bei einem Produkt oder mehreren einzelnen Produkten zu beobachten sind. Das bedeutet, dass die Temperatur zur Beschleunigung des Verfahrens so hoch wie möglich eingestellt werden kann.

Überraschend war es, dass die Umsetzung, die im diskontinuierlichen Verfahren mehrere Stunden benötigt, in den genannten Reaktoren in wenigen Minuten vollständig abläuft. Dabei zeigen die Produkte gleiche oder verbesserte Anwendungseigenschaften als die diskontinuierlich im Batchverfahren hergestellten analogen Produkte, wodurch es möglich wird, mit dem erfindungsgemäßen Verfahren die strahlungshärtbaren, Urethangruppen enthaltenden Präpolymere in wesentlich kürzerer Zeit bei vergleichbarer Qualität herzustellen. Insbesondere die Anwendung höherer Temperaturen führt hier zu einer Beschleunigung der Reaktion, ohne dass es zu einer der gefürchteten Folge- und / oder Nebenreaktionen der ethylenisch ungesättigten Doppelbindung kommt.

Entgegen den Erwartungen nach dem Stand der Technik zeigte sich überraschenderweise, dass sich mittels des erfindungsgemäßen Verfahrens strahlungshärtbare, Urethangruppen enthaltende Präpolymere herstellen lassen, die bei vollständigem Umsatz der Isocyanatgruppen tragenden Verbindung(en) eine geringere Viskosität aufweisen (Beispiel 3), als die in einem diskontinuierlichen Verfahren hergestellten Präpolymere (Beispiel 2).

Das erfindungsgemäße Verfahren zeichnet sich dadurch aus, dass ein Umsatz von mehr als 99% bezogen auf die Verbindung mit ethylenisch ungesättigter Doppelbindung erreicht wird, was aus sicherheitstechnischen Gründen ein wesentlicher Vorteil gegenüber den aus dem Stand der Technik bekannten kontinuierlichen Verfahren ist.

Strahlenhärtbare, Urethangruppen enthaltende Präpolymere, die mit dem erfindunsgemäßen Verfahren hergestellt werden können, sind monomere, oligomere oder polymere Verbindungen sowie deren Mischungen, die mindestens eine Urethangruppe aufweisen sowie über mindestens eine ethylenisch ungesättigte Doppelbindung verfügen, die einen weiteren Polymeraufbau und / oder eine Vernetzung durch Einstrahlung aktinischer Strahlung und / oder thermisch radikalisch ermöglicht.

Unter aktinischer Strahlung wird elektromagnetische, ionisierende Strahlung verstanden, insbesondere UV-Strahlen, Gamma-Strahlen, Röntgenstrahlen, sichtbares Licht, Infrarotlicht sowie Elektronenstrahlen (Roche Lexikon Medizin, 4. Auflage; Urban & Fischer Verlag, München 1999).

Unter Einwirkung aktinischer Strahlung mit ethylenisch ungesättigten Verbindungen unter Polymerisation reagierende Gruppen (strahlenhärtbare Gruppen) werden im Rahmen der vorliegenden Erfindung z.B. Vinylether-, Vinylester, Maleinyl-, Fumaryl-, Maleinimid-, Dicyclopentadienyl-, Acrylamid-, Acryl- und Methacryl-Gruppen verstanden, wobei dies bevorzugt Vinylether-, Acrylat- und/oder Methacrylat-Gruppen, besonders bevorzugt Acrylatgruppen sind.

In dem erfindungsgemäßen Verfahren wird mindestens eine Verbindung A, welche mindestens eine Isocyanatgruppe pro Molekül trägt, mit mindestens einer Verbindung B, welche mindestens eine isocyanatreaktive Gruppe sowie mindestens eine ethylenisch ungesättigte Doppelbindung pro Molekül trägt, und gegebenenfalls einer Verbindung C, welche isocyanatreaktive Gruppen trägt, umgesetzt.

Dabei erfolgt die Zusammenführung der Verbindungen in einem Mischer unmittelbar vor der Reaktion. Die Verbindungen A und B werden dabei getrennt in Form von mindestens zwei verschiedenen Komponenten einem Mischelement zugeführt. Diese Komponenten können weitere Bestandteile wie Lösemittel, Reaktivverdünner, Hilfsmittel und / oder Katalysatoren enthalten. Ebenso ist es möglich, weitere Komponenten entlang der Verweilzeitstrecke dem Reaktionsgemisch zuzuführen. Insbesondere ist es möglich, eine oder mehrere Komponenten zuzuführen, welche eine oder mehrere isocyanatreaktive Verbindungen B oder C umfasst, um den Anteil an Isocyanatgruppen im Endprodukt auf ein Minimum zu reduzieren.

Beispiele für Verbindungen A sind: 3-Methacryloylpropylisocyanat, Cyclohexylisocyanat, n-Butylisocyanat, Phenylisocyanat, Toluolylisocyanat, 1,4-Tetramethylendiisocyanat, 1,6-Hexamethylendiisocyanat (HDI), 1,8-Octamethylendiisocyanat, 1,11-Undecamethylendiisocyanat, 1,12-Dodekamethylendiisocyanat, 2,2,4 bzw. 2,4,4-Trimethyl-1,6-hexamethylendiisocyanat (TMDI), 1,3- und 1,4-Cyclohexandiisocyanat, 1-Isocy-anato-3-Isocyanatomethyl-3,5,5-trimethylcyclohexan (IPDI), 1-Isocyanato-1-methyl-4(3)-isocyanatomethylcyclohexan (1MCI), 1,4-Phenylendiisocyanat, 1,5-Naphtylendiisocyanat, 1-Isocyanato-2-isocyanatomethylcyclo-pentan, (4,4'- und/oder 2,4'-) Diisocyanatodicyclohexylmethan (H12-MDI), Xylylendiisocyanat (XDI), Bis-(4-Isocyanato-3-methylcyclohexyl)-methan, 1,3- und/oder 1,4-Hexahydroxylylendiisocyanat (H6-XDI),α,α,α',α'-Tetramethyl-1,3- und/oder -1,4-xylylendiisocyanat (TMXDI), 2,4- und/oder 2,6-Hexahydroto-luylendiisocyanat (H6-TDI), 2,4- und/oder 2,6-Toluoldiisocyanat (TDI), 4,4'-und/oder 2,4'-Diphenylmethandii-socyanat (MDI) oder deren Derivate mit Urethan-, Isocyanurat-, Allophanat-, Biuret-, Uretdion-, Carbodiimid-, Oxadiazintrion- und/oder Iminooxadiazindionstruktureinheiten, solange sie mindestens eine freie NCO-Gruppe besitzen sowie deren Mischungen.

Als Verbindungen B können alle Verbindungen, die sowohl strahlenhärtbare, wie auch isocyanatreaktive Gruppen enthalten, verwendet werden. Bevorzugt werden dabei OH-funktionelle Ester der (Meth-)Acrylsäure oder OH-funktionelle Vinylether verwendet. Beispiele für Verbindungen B sind: 2-Hydroxyethyl(meth)acrylat, Polyethylenoxid-mono(meth)acrylat (z.B. PEA6 / PEM6; Laporte Performance Chemicals Ltd., UK), Polypropylenoxidmono(meth)acrylat (z.B. PPA6, PPM5S; Laporte Performance Chemicals Ltd., UK), Polyalkylenoxid-mono(meth)acrylat (z.B. PEM63P, Laporte Performance Chemicals Ltd. , UK), Poly(ε-caprolacton)mono(meth)acrylate wie z.B. Tone M100^{®} (Dow, Schwalbach, DE), 2-Hydroxypropyl(meth)acrylat, 4-Hydroxybutyl(meth)acrylat, Hydroxybutylvinylether, 3-Hydroxy-2,2-dimethylpropyl(meth)acrylat, die hydroxyfunktionellen Mono-, Di- oder soweit möglich höheren Acrylate wie z.B. Glycerindi(meth)acrylat, Trimethylolpropandi(meth)acrylat, Pentaerythrittri(meth)acrylat oder Dipentaerythritpenta(meth)acrylat, die durch Umsetzung mehrwertiger gegebenenfalls alkoxylierter Alkohole wie Trimethylolpropan, Glycerin, Pentaerythrit, Dipentaerythrit zugänglich sind.

Ferner können als OH-funktionelle Verbindungen, die strahlenhärtbare Gruppen aufweisen, auch die Umsetzungsprodukte von doppelbindungshaltigen Säuren mit gegebenenfalls doppelbindungshaltigen Epoxidverbindungen, wie z.B. die Umsetzungsprodukte von (Meth)acryl-säure mit Glycidyl(meth)acrylat oder Bisphenol-A-diglycidylether, in der Urethanisierung eingesetzt werden.

Bevorzugt werden bei der Urethanbildung Hydroxyethyl(meth)acrylat, Hydroxypropyl(meth)acrylat, Hydroxybutyl(meth)acrylat, 3-Acryloyloxy-2-hydroxypropylmethacrylat (GAMA) und teilweise mit (Meth-)Acrylsäure veresterte alkoxlierte Polyole, ganz besonders bevorzugt Hydroxyethylacrylat und Hydroxypropylacrylat sowie teilweise mit Acrylsäure veresterte alkoxylierte Polyole eingesetzt.

Neben den OH-funktionellen ungesättigten Verbindungen der Komponente B können im erfindungsgemäßen Verfahren auch unter Einwirkung von aktinischen Strahlen nichtreaktive Verbindungen C eingesetzt werden, die NCO-reaktive Gruppen wie beispielsweise OH, SH oder NH aufweisen.

Es können beispielsweise niedermolekulare Alkohole, Polyetherpolyole, Polyesterpolyole, Polycarbonatpolyole zum Abbau überschüssiger NCO-Gruppen oder zur Beeinflussung der Produkteigenschaften als Komponente C mitverwendet werden. Als Polyole können höhermolekulare und-auch niedermolekulare Hydroxylverbindungen eingesetzt werden.

Höhermolekulare Hydroxylverbindungen umfassen die in der Polyurethan-Chemie üblichen Hydroxypolyester, Hydroxypolyether, Hydroxypolythioether, Hydroxypolyacetale, Hydroxypolycarbonate, Dimerfettalkohole und/oder Esteramide, jeweils mit mittleren Molekulargewichten von 400 bis 8 000 g/mol, bevorzugt solche mit mittleren Molekulargewichten von 500 bis 6 500 g/mol. Bevorzugte höhermolekulare Hydroxylverbindungen sind Hydroxypolyether, Hydroxypolyester und Hydroxypolycarbonate.

Beispiele für niedermolekulare Polyole sind: monofunktionelle aliphatische, araliphatische und aromatische Alkohole wie Methanol, Ethanol, n-Propanol, Isopropanol, Butanol, Hexanol, Fettalkohole, Phenole, sowie aliphatische, araliphatische und aromatische Diole oder Polyole wie 1,2-Ethandiol, 1,2- und 1,3-Propandiol, die isomeren Butandiole, Neopentylglycol, 1,6-Hexandiol, 2-Methylpropandiol-1,3, 2,2,4-Trimethylpentandiol-1,3, 2-n-Butyl-2-ethylpropandiol-1,3, Glycerinmonoalkanoate (wie z.B. die Glycerinmonostearate), Dimerfettalkohole, Diethylenglykol, Triethylenglykol, Tetraethylenglykol, 1,4-Dimethylolcyclohexan, Dodekandiol, Bisphenol-A, hydriertes Bisphenol-A, Hexandiol-1,3, Oktandiol-1,3, Dekandiol-1,3, 3-Methylpentandiol-1,5, 3,3-Dimethylbutandiol-1,2, 2-Methyl-pentandiol-1,3, 2-Methyl-pentandiol-2,4, 3-Hydroxymethylheptanol-4, 2-Hydroxymethyl-2,3-dimethylpentanol-1, Glycerin, Trimethylolethan, Trimethylolpropan, Trimerfettalkohole, isomere Hexantriole, Sorbit, Pentaerythrit, Ditrimethylolpropan, Dipentaerythrit, Diglycerin, Tricyclodekandiol (TCD). Bevorzugt sind 1,2-Ethandiol, 1,2- und 1,3-Propandiol, die isomeren Butandiole, Neopen-tylglycol, 1,6-Hexandiol, 2-Ethylhexandiol-1,3, Perhydrobisphenol, 4,8-Bis-(hydro-xymethyl)-tricyclo[5.2.0(2.6)]-dekan (TCD-Alkohol).

Als Polyetherpolyole geeignet sind die in Polyurethan-Chemie üblichen Polyether, wie z.B. die unter Verwendung von zwei- bis sechswertigen Startermolekülen wie Wasser oder den oben genannten Polyolen oder 1- bis 4-NH-Bindungen aufweisenden Aminen hergestellten Additions- bzw. Mischadditionsverbindungen des Tetrahydrofurans, Styroloxids, Ethylenoxids, Propylenoxids, der Butylenoxide oder des Epichlorhydrins, insbesondere des Ethylenoxids und/oder des Propylenoxids. Bevorzugt sind im Durchschnitt 2 bis 4 Hydroxylgruppen aufweisende Propylenoxidpolyether, die bis zu 50 Gew.-% eingebaute Polyethylenoxid-Einheiten enthalten können. Es ist dabei sowohl denkbar, klassische Polyether, die auf Basis einer Katalyse mit z.B. Kaliumhydroxid hergestellt werden, einzusetzen, als auch solche Polyether, die mit den neueren Verfahren auf Basis der Doppelmetallcyanid-Katalysatoren hergestellt werden. Letztere Polyether haben in der Regel einen besonders niedrigen Gehalt an terminaler Unsättigung von weniger als 0,07meq/g, enthalten deutlich weniger Monoole und haben in der Regel eine geringe Polydispersität von weniger als 1,5. Der Einsatz solcher durch Doppelmetallcyanid-Katalyse hergestellten Polyether ist für den Fall der Verwendung von Polyethern bevorzugt.

Als Polyesterpolyole geeignet sind z.B. Umsetzungsprodukte von mehrwertigen, vorzugsweise zweiwertigen und gegebenenfalls zusätzlich dreiwertigen Alkoholen mit mehrbasischen, vorzugsweise zweibasischen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer aromatischer und/oder heterocyclischer Natur sein und gegebenenfalls z.B. durch Halogenatome substituiert und/oder ungesättigt sein. Beispielhaft sind genannt Adipinsäure, Phthalsäure, Isophthalsäure, Bernsteinsärue, Korksäure, Azelainsäure, Sebacinsäure, Trimellitsäure, Phthalsäureanhydrid, Tetrahydrophthalsäureanhydrid, Glutarsäureanhydrid, Tetrachlorphthalsäureanhydrid, Endomethylentetrahydrophthalsäureanhydrid, Maleinsäureanhydrid, Maleinsäure, Fumarsäure, dimere und trimere Fettsäuren wie Ölsäure, gegebenenfalls in Mischung mit monomeren Fettsäuren, Terephthalsäuredimethylester oder Terephthalsäure-bis-glykolester. Bevorzugt sind unterhalb 60°C schmelzende Hydroxypolyester mit 2 oder 3 endständigen OH-Gruppen.

Die in Frage kommenden Polycarbonatpolyole sind durch Reaktion von Kohlensäurederivaten, z.B. Diphenylcarbonat, Dimethylcarbonat oder Phosgen, mit Diolen erhältlich. Als derartige Diole kommen z.B. Ethylenglykol, Triethylenglykol, Tetraethylenglykol, Propandiol-1,2 und -1,3, Butandiol-1,4 und -1,3, Pentandiol-1,5, Hexandiol-1,6, Octandiol-1,8, Neopentylgkylol, 1,4-Bis(hydroxymethyl)cyclohexan, Bis(hydroxymethyl)tricyclo[5.2.1.0^{2.6}]decan oder 1,4-Bis(2-hydroxyethoxy)benzol, 2-Methyl-1,3-propandiol, 2,2,4-Trimethylpentandiol, Dipropylenglykol, Polypropylenglykole, Dibutylenglykol, Polybutylenglykole, Bisphenol A und Tetrabrombisphenol A oder Mischungen der genannten Diole in Frage. Bevorzugt erhält die Diolkomponente 40 bis 100 Gew.-% Hexandiol, vorzugsweise Hexandiol-1,6, und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß DE-A1 770 245, oder durch Veretherung von Hexandiol mit sich selbst zum Di- oder Trihexylenglykol erhalten wurden. Die Herstellung solcher Derivate ist z.B. aus der DE-A 1 570 540 bekannt. Auch die in der DE-A 3 717 060 beschriebenen Polyether-Polycarbonatdiole können sehr gut eingesetzt werden.

Die Hydroxypolycarbonate sollen im wesentlichen linear sein. Sie können aber auch gegebenenfalls durch den Einbau polyfunktioneller Komponenten, insbesondere niedermolekularer Polyole, leicht verzweigt werden. Hierzu eignen sich beispielsweise Trimethylolpropan, Hexantriol-1,2,6, Glycerin, Butantriol-1,2,4, Pentaerythrit, Chinit, Mannit, Sorbit, Methylglykosid und 4,3,6-Dianhydrohexite.

Die zur Ausbildung von Urethangruppen führende Additionsreaktion von einer mindestens eine Isocyanatgruppe tragenden Verbindung mit einer mindestens eine Hydroxylgruppe tragenden Verbindung kann in an sich bekannter Weise mittels geeigneter Katalysatoren wie beispielsweise Zinnoctoat, Dibutylzinndilaurat oder tertiären Aminen wie Dimethylbenzylamin beschleunigt werden. Weitere Katalysatoren sind z.B. beschrieben in Houben-Weil, Methoden der Organischen Chemie, Bd. XIV/2, Thieme-Verlag, Stuttgart 1963, S. 60f. sowie Ullmanns Enzyklopädie der Technischen Chemie, 4. Aufl., Bd 19 (1981), S. 306. Im Allgemeinen werden solche Katalysatoren in einer Menge von 0,001 bis 2,5 Gew.-%, bevorzugt von 0,005 bis 1,5 Gew.-%, bezogen auf die Gesamtmenge der Komponenten A, B und C eingesetzt.

Es ist vorteilhaft, Komponente B sowie deren Umsetzungsprodukte durch Zugabe geeigneter Inhibitoren bzw. Antioxidantien wie beispielsweise Phenole wie z.B. 2,6-Ditert-butylphenole, und / oder Hydrochinone und / oder Hydrochinonmonoalkylether und / oder Nitrosamine und / oder Phenothiazine und / oder Phosphorigsäureester und / oder stabile N-Oxylradikale und / oder andere Radikalfänger in Mengen von jeweils 0,0005 bis 0,3 Gew-% bezogen auf die Gesamtmasse an Komponente B vor vorzeitiger und unerwünschter radikalischer Polymerisation zu schützen. Der Zusatz dieser Hilfsmittel kann vor, gleichzeitig und/oder im Anschluss an die Umsetzung von Komponente B erfolgen.

Zusätzlich können dem Präpolymer und / oder einer der Komponenten A, B und / oder C die in der Chemie strahlenhärtender Bindemittel dem Fachmann bekannten Reaktivverdünner (siehe "Chemistry & Technology of UV & EB Formulations for Coatings, Inks & Paints", Vol. 2, PKT Oldring (Ed.), SITA Technology, London, England, S. 250-290, 1991) zugesetzt werden. Diese Reaktivverdünner besitzen in der Regel neben den strahlenhärtbaren Funktionalitäten keine weiteren funktionellen Gruppen. Allerdings ist es möglich, auch solche Verbindungen einzusetzen, die noch Säure-, Epoxy-, Silyl-, Phosphin-, Phosphat-, Harnstoff-, Isocyanurat-, Uretdion, Biuret- oder andere Gruppen enthalten, insbesondere wenn hierdurch weitere vorteilhafte Effekte wie z.B. eine bessere Haftung im Lackierprozess erreicht werden. Beispiele für Reaktivverdünner sind

(Meth)acrylsäure und ihre Ester, Vinyl(meth)acrylat, Allyl(meth)acrylat, Trimethylolpropantriallylether, Glycerintri(meth)acrylat, Trimethylolpropantri(meth)acrylat, Pentaerythrittetra(meth)acrylat, und Dipentaerythrithexa(meth)acrylat, Styrol, Divinylbenzol, Vinyltoluol,

Iso-bornyl(meth)acrylat, Butoxyethyl(meth)acrylat Alkylenglycoldi(meth)acrylate wie Ethylen-, Propylenglycol-di(meth)acrylate, Polyalkylenglycoldi(meth)acrylate wie Polyethylen-, Polypropylenglycoldi(meth)acrylate, Di(meth)acrylate einfacher Diole wie z. B. Butandioldi(meth)acrylat, Hexandioldi(meth)acrylat, Cyclohexandimethanoldi(meth)acrylat, Dicyclopentyl(meth)acrylat. Bevorzugt sind Hexandioldiacrylat, Isobornylmethacrylat, Isodecylmethacrylat, Tricyclodekandimethyloldimethacrylat, Tripropylenglycoldiacrylat, und die (meth)acrylierten Produkte von ggf. ethoxylierten oder propoxylierten Diolen oder Polyolen wie z.B. Trimethy-lolpropan, Pentaerythrit, Bisphenol A oder Cyclohexandimethanol. Auch Gemische aus den vorgenannten Verbindungen können verwendet werden. Bevorzugt sind Trimethyolpropantrimethacrylat und/oder Trimethyolpropantriacrylat. Der Anteil an Reaktivverdünner beträgt üblicherweise unter 60 Gew.-% bezogen auf das Präpolymer, bevorzugt werden weniger als 30 Gew.-% zugefügt und besonders bevorzugt wird auf den Einsatz von Reaktivverdünner verzichtet.

Anstelle von Reaktivverdünnern können natürlich auch Lösungsmittel verwendet werden. Als Lösungsmittel kommen inerte Lösungsmittel, z. B. Aceton, Methylethylketon, Tetrahydrofuran, Dichlormethan, Toluol, C₁-C₄-Alkylester der Essigsäure wie Ethylacetat oder Butylacetat oder Acrylatester wie Hexandiol-1,6-diacrylat in Frage.

Produkte, die über das erfindungsgemäße Verfahren zugänglich werden, sind ebenfalls Gegenstand der Erfindung.

Die erfindungsgemäßen Präpolymere eignen sich zur Beschichtung von Substraten aus Holz, Metall, Kunststoff, Glas, Textilien, mineralischen Stoffen, Papier und/oder bereits beschichteten Substraten hieraus oder von Substraten hieraus, die aus beliebigen Kombinationen der genannten Materialen bestehen. Insbesondere seien hier Anwendungen in der Industrielackierung von MDF-Platten, vormontierten höherwertigen Gütern, die bereits temperaturempfindliche Baugruppen enthalten wie z.B. elektronischen Baugruppen, aber auch die Läckierung von Möbeln, Coils, Gegenständen des täglichen Lebens, Automobilkarossen und deren Anbauteile genannt.

Die erfindungsgemäßen Präpolymere sind des Weiteren zur Herstellung von Druckfarben geeignet. Diese Druckfarben können z.B. im Offset-, Flexo-, Tif- oder Hochdruck-Druckverfahren eingesetzt werden.

Die erfindungsgemäßen Präpolymere können dabei auch in Kombination miteinander oder mit anderen üblichen Bindemitteln gemeinsam verwendet werden; wie z.B. mit Polyestern, Polyacrylaten, Polyethern, Polyamiden, Polycarbonaten, die auch gegebenenfalls ungesättigte Gruppen enthalten können.

Die erfindungsgemäßen Präpolymere eigenen sich auch als Härtmassen in Form-, Spritz- und Druckgussverfahren.

Die Erfindung wird nachstehend anhand der Beispiele näher erläutert ohne sie jedoch auf diese zu beschränken.

### Beispiele

### Beispiel 1: Reaktoraufbau

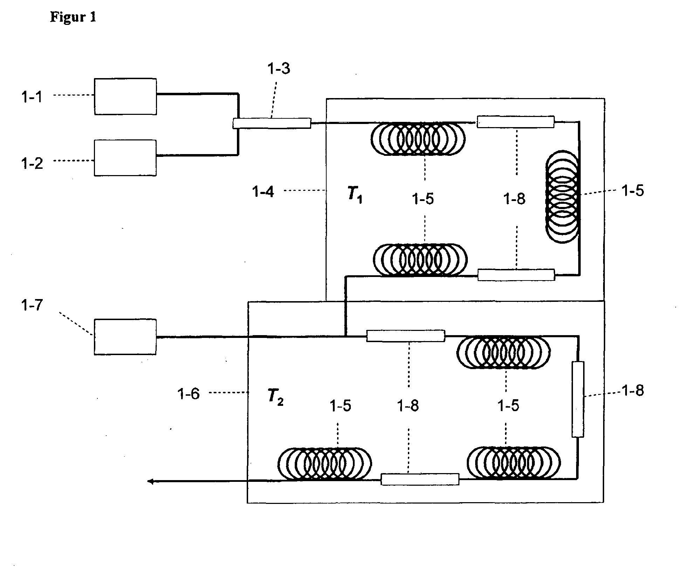

Figur 1 zeigt ein Beispiel eines Reaktoraufbaus, mit dem das erfindungsgemäße Verfahren durchgeführt werden kann. Aus zwei Vorlagen (1-1, 1-2), welche mindestens eine Verbindung mit isocyanatreaktiven Gruppen- bzw. mindestens eine Verbindung mit Isocyanatgruppen enthält, werden die Reaktionspartner zunächst einem ersten Mischelement (1-3) bei Umgebungstemperatur mittels Pumpen (hier nicht gezeigt) zugeführt. Bei einem solchen ersten Mischelement kann es sich z.B. um einen µ-strukturierten Kaskadenmischer der Fa. Ehrfeld Mikrotechnik BTS GmbH handeln. Isocyanatreaktive und Isocyanatgruppen-tragende Verbindungen werden in getrennten Vorlagen aufbewahrt. Die Vorlagen (1-1, 1-2) können weitere Verbindungen wie z.B. Katalysatoren, Lösemittel, Reaktiwerdünner und/oder Hilfsstoffe enthalten. Nach intensiver Vermischung der Komponenten wird der Stoffstrom in eine erste Reaktionszone (1-4) eingebracht. Hier wird der Stoffstrom über Wärmetauscher (1-5) auf eine Temperatur *T*₁ gebracht. Das Reaktionsgemisch durchläuft eine Verweilstrecke, in die in gewissen Abständen weitere Mischelemente (1-8) eingebracht sind. Hierbei handelt es sich um Mischstrukturen, wie sie in EP1284159 beschrieben sind. Auch können hier alternativ statische Mischelemente wie z.B. Kenics oder SMX eingesetzt werden. Die Temperatur des Reaktionsgemisches wird durch intensive Wärmeübertragung auf der Temperatur *T*₁ gehalten.

Nach einer definierten Verweilstrecke wird das Reaktionsmedium in eine zweite Reaktionszone (1-6) gefördert, in der eine Temperatur *T*₂ herrscht. Dem Reaktionsgemisch wird eine weitere Komponente aus einer Vorlage (1-7) zugeführt und es erfolgt eine intensive Durchmischung in einem Mischelement (1-8). Die weitere Komponente kann eine oder mehrere weitere Verbindungen mit isocyanatreaktiven Gruppen oder Isocyanatgruppen enthalten. Die weitere Komponente kann Hilfsstoffe und/oder Lösemittel enthalten.

Das Reaktionsgemisch durchläuft in der zweiten Reaktionszone eine definierte Verweilstrecke bestehend aus Wärmeübertragungselementen (1-5) und Mischelementen (1-8), bevor es die Reaktionszone verlässt. Die Temperaturen *T*₁ und *T*₂ und die Verweilzeit werden so eingestellt, dass der Umsatz der Reaktionskomponenten möglichst vollständig ist.

### Beispiel 2: Semi-Batch-Verfahren

In einem 1000ml-Vierhalsrundkolben mit Rückflusskühler, Heizpilz, mechanischem Rührer, Luftdurchleitung (2 L/h), Innenthermometer und Tropftrichter wurden 288,84g Desmodur^{®} N3600 (Bayer MaterialScience AG, Leverkusen), 120g Hexandioldiacrylat, 0,3g Dibutylzinndilaurat (Desmorapid Z, Bayer MaterialScience AG, Leverkusen) und 0,6g 2,6-Di-tert.-butyl-4-methylphenol vorgelegt und auf 50°C erwärmt. Es wurden dann zunächst 61,69g 2-Hydroxypropylacrylat und anschließend 128,57g Hydroxyethylacrylat so zugetropft, dass die Temperatur von 60°C nicht überschritten wurde. Es wurde nachgerührt, bis der NCO-Wert unter 0,1% gefallen war. Es wurde ein farbloses Harz mit einem Rest-NCO-Gehalt von 0% und einer Viskosität von 12.500 mPas (23°C) erhalten.

Die Viskositätsmessungen wurden mit einem Platte-Platte-Rotationsviskosimeter, RotoVisko 1 der Firma Haake, DE, mit einer Schergeschwindigkeit von 47,94 m/s nach ISO/DIS 3219:1990 durchgeführt.

### Beispiel 3: Kontinuierliches Verfahren

Es wurden jeweils eine Mischung I aus 2-Hydroxypropylacrylat, Hydroxyethylacrylat und Dibutylzinndilaurat sowie eine Mischung II aus Desmodur^{®} N3600, Hexandioldiacrylat und 2,6-Di-tert.-butyl-4-methylphenol entsprechend der u.a. Zusammensetzung vorgelegt.

**Mischung I**

| | |
|---|---|
| 2-Hydroxypropylacrylat | 67,47 Gew.-% |
| Hydroxyethylacrylat | 32,373 Gew.-% |
| Dibutylzinndilaurat | 0,157 Gew-% |

**Mischung II**

| | |
|---|---|
| Desmodur^{®} N3600 | 29,348 Gew.-% |
| Hexandioldiacrylat | 70,505 Gew.-% |
| 2,6-Di-tert.-butyl-4-methylphenol | 0,147 Gew-% |

Mischung I und Mischung II wurden mit Hilfe von Pumpen (hier Doppelkolben-Spritzenpumpen) über einen µ-strukturierten Kaskadenmischer der Fa. Ehrfeld Mikrotechnik BTS GmbH kontinuierlich vermischt und in einen ersten Reaktionsteil gepumpt (siehe Figur 1). Die Durchmischung erfolgte bei Raumtemperatur (25°C).

Innerhalb des ersten Reaktionsteils (Sektion 1) durchläuft das Reaktionsgemisch eine durch Eintauchen in ein Thermostatisierungsbad temperierte Verweilstrecke. Diese Verweilstrecke besteht in diesem Fall aus einer 1/8"-Kapillare, in die in regelmäßigen Abständen statische Mischelemente (siehe EP1284159) eingebracht sind, und einem Verweilreaktor mit einem Innendurchmesser von 15 mm, welcher ebenfalls statische Mischelemente enthält. Die Verweilzeit beträgt in Summe 30 min., die Reaktionstemperatur 110 °C.

Es wurde ein farbloses Harz mit einem Rest-NCO-Gehalt von 0% und einer Viskosität von 10.000 mPas (23°C) erhalten.

Die Viskositätsmessungen wurden mit einem Platte-Platte-Rotationsviskosimeter, RotoVisko 1 der Firma Haake, DE, mit einer Schergeschwindigkeit von 47,94 m/s nach ISO/DIS 3219:1990 durchgeführt.

### Es zeigen:

**Figur 1** zeigt schematisch einen Reaktoraufbau, mit dem das erfindungsgemäße Verfahren ausgeführt werden kann, bestehend aus drei Vorlagen (1-1, 1-2, 1-7), zwei Reaktionszonen (1-4, 1-6) mit den Temperaturen *T*₁ und *T*₂, eine Reihe von Mischelementen (1-3, 1-8) sowie Wärmeübertragungselemente (1-5).
**Figur 2** zeigt das Ergebnis einer Langzeit-DTA (DTA= Differential-Thermoanalyse) an der in Beispiel 2 eingesetzten Vorlage. Auf der Abszisse (X-Achse) ist die Temperatur in °C, auf der Ordinate (Y-Achse) der Wärmefluss in mW/g aufgetragen. Negative Werte auf der Y-Achse bedeuten eine Wärmeabgabe der Probe (Exothermie); positive Werte auf der Y-Achse bedeuten eine Wärmeaufnahme der Probe (Endothermie). Die Messung wurde nach ISO17025 durchgeführt. Heizrate betrug im vorliegenden Fall: 0,05K/min. Bei einer Temperatur von etwa 116°C tritt eine deutlich erkennbare exotherme Reaktion auf.
**Figur 3** zeigt das Ergebnis einer Langzeit-DTA (DTA= Differential-Thermoanalyse) an dem in Beispiel 2 gewonnenen Produkt. Auf der Abszisse (X-Achse) ist die Temperatur in °C, auf der Ordinate (Y-Achse) der Wärmefluss in mW/g aufgetragen. Negative Werte auf der Y-Achse bedeuten eine Wärmeabgabe der Probe (Exothermie); positive Werte auf der Y-Achse bedeuten eine Wärmeaufnahme der Probe (Endothermie). Die Messung wurde nach ISO17025 durchgeführt. Heizrate betrug im vorliegenden Fall: 0,05K/min. Oberhalb einer Temperatur von etwa 100°C ist eine zunehmende exotherme Reaktion zu erkennen.

## Patentansprüche

1. Verfahren zur kontinuierlichen Herstellung von strahlenhärtbaren, Urethangruppen enthaltenden Präpolymeren **dadurch gekennzeichnet, dass** mindestens zwei Komponenten zunächst gemischt und anschließend durch eine Verweilstrecke geführt werden, wobei eine der mindestens zwei Komponenten eine oder mehrere Verbindungen mit mindestens einer Isocyanatgruppe pro Molekül umfasst, während die andere der mindestens zwei Komponenten eine oder mehrere Verbindungen mit mindestens einer isocyanatreaktiven Gruppe sowie mindestens einer ethylenisch ungesättigten Doppelbindung pro Molekül umfasst, wobei die Verweilzeitstrecke eine Wärmeübertragungsrate von 20 - 750 kW/(K·m3) aufweist.

2. Verfahren nach Anspruch 1 **dadurch gekennzeichnet, dass** es unter Druck von 0-30 bar und bei Temperaturen von +20 bis +200°C durchgeführt wird.

3. Verfahren nach Anspruch 1 oder 2 **dadurch gekennzeichnet, dass** die Verweilzeit im Bereich von 20 sec. bis 120 min. liegt.

4. Verfahren nach einem der Ansprüche 1 bis 3 **dadurch gekennzeichnet, dass** die Verweilzeitstrecke einen maximalen Druckverlust von 0 bis 30 bar aufweist.

5. Verfahren nach einem der Ansprüche 1 bis 4 **dadurch gekennzeichnet, dass** entlang der Verweilstrecke eine intensive Durchmischung der Komponenten durch Einsatz von Mischelementen stattfindet.

6. Verfahren nach einem der Ansprüche 1 bis 5 **dadurch gekennzeichnet, dass** entlang der Verweilstrecke eine oder mehrere weitere Komponenten zugeführt werden können, wobei eine oder mehrere Komponenten eine oder mehrere der folgenden Verbindungen umfassen können: Isocyanatgruppen tragende Verbindung, isocyanatreaktive Verbindung, Lösemittel, Katalysator, Reaktivverdünner, Hilfsstoff.

7. Verfahren nach einem der Ansprüche 1 bis 6 **dadurch gekennzeichnet, dass** die Verweilstrecke in zwei oder mehr Zonen unterteilt ist, in denen unterschiedliche Temperaturen herrschen.

8. Verfahren nach einem der Ansprüche 1 bis 7 **dadurch gekennzeichnet, dass** es in einem Temperaturbereich ausgeführt wird, bei dem mittels DTA bereits erste Anzeichen einer Reaktion bei einem Edukt oder mehreren einzelnen Edukten und / oder bei einem Produkt oder mehreren einzelnen Produkten zu beobachten sind.

9. Verfahren nach einem der Ansprüche 1 bis 8 **dadurch gekennzeichnet, dass** ein Umsatz von mehr als 99% bezogen auf die Verbindung mit ethylenisch ungesättigter Doppelbindung erreicht wird.

10. Strahlenhärtbare, Urethangruppen enthaltende Präpolymere, die nach einem Verfahren gemäß Anspruch 9 erzeugt wurden, mit einem Rest-NCO-Gehalt von 0%.

11. Verwendung der strahlenhärtbaren, Urethangruppen enthaltenden Präpolymere nach Anspruch 10 zur Beschichtung von Gegenständen.

## Claims

1. Process for continuous production of radiation-curable prepolymers which comprise urethane groups, **characterized in that** at least two components are initially mixed and subsequently passed through a delay section, wherein one of the at least two components comprises one or more compounds having at least one isocyanate group per molecule while the other of the at least two components comprises one or more compounds having at least one isocyanate-reactive group and at least one ethylenically unsaturated double bond per molecule, wherein the delay time section has a heat transfer rate of 20-750 kW/(K*m³).

2. Process according to Claim 1, **characterized in that** it is carried out under a pressure of 0-30 bar and at temperatures of from +20°C to +200°C.

3. Process according to Claim 1 or 2, **characterized in that** the delay time is in the range of from 20 sec to 120 min.

4. Process according to any one of Claims 1 to 3, **characterized in that** the delay time section has a maximum pressure loss of from 0 to 30 bar.

5. Process according to any one of Claims 1 to 4, **characterized in that** the use of mixing elements effects intensive commixing of the components along the length of the delay section.

6. Process according to any one of Claims 1 to 5, **characterized in that** one or more further components can be introduced along the length of the delay section, wherein one or more components can comprise one or more of the following compounds: compound bearing isocyanate groups, isocyanate-reactive compound, solvent, catalyst, reactive diluent, auxiliary.

7. Process according to any one of Claims 1 to 6, **characterized in that** the delay section is divided into two or more zones in which different temperatures prevail.

8. Process according to any one of Claims 1 to 7, **characterized in that** it is conducted in a temperature range at which initial signs of a reaction can already be observed for one reactant or two or more individual reactants and/or for one product or two or more individual products using DTA.

9. Process according to any one of Claims 1 to 8, **characterized in that** a conversion of more than 99% based on the compound having an ethylenically unsaturated double bond is achieved.

10. Radiation-curable prepolymers which comprise urethane groups, which are prepared by a process according to Claim 9 and which have a residual NCO content of 0%.

11. Use of the radiation-curable prepolymers which comprise urethane groups according to Claim 10 for coating objects.

## Revendications

1. Procédé de fabrication continue de prépolymères durcissables par rayonnement, contenant des groupes uréthane, **caractérisé en ce qu'**au moins deux composants sont tout d'abord mélangés, puis passés dans une section de séjour, un des deux composants ou plus comprenant un ou plusieurs composés contenant au moins un groupe isocyanate par molécule, tandis que l'autre des deux composants ou plus comprend un ou plusieurs composés contenant au moins un groupe réactif avec les isocyanate et au moins une double liaison éthyléniquement insaturée par molécule, la section de temps de séjour présentant un taux de transfert de chaleur de 20 à 750 kW/(K·m³).

2. Procédé selon la revendication 1, **caractérisé en ce qu'**il est réalisé sous une pression de 0 à 30 bar et à des températures de +20 à +200 °C.

3. Procédé selon la revendication 1 ou 2, **caractérisé en ce que** le temps de séjour se situe dans la plage allant de 20 s à 120 min.

4. Procédé selon l'une quelconque des revendications 1 à 3, **caractérisé en ce que** la section de temps de séjour présente une perte de charge maximale de 0 à 30 bar.

5. Procédé selon l'une quelconque des revendications 1 à 4, **caractérisé en ce qu'**un mélange intensif des composants par l'utilisation d'éléments de mélange a lieu le long de la section de séjour.

6. Procédé selon l'une quelconque des revendications 1 à 5, **caractérisé en ce qu'**un ou plusieurs composants supplémentaires peuvent être introduits le long de la section de séjour, un ou plusieurs composants pouvant comprendre un ou plusieurs des composés suivants : un composé portant des groupes isocyanate, un composé réactif avec les isocyanates, un solvant, un catalyseur, un diluant réactif, un adjuvant.

7. Procédé selon l'une quelconque des revendications 1 à 6, **caractérisé en ce que** la section de séjour est divisée en deux zones ou plus, dans lesquelles différentes températures règnent.

8. Procédé selon l'une quelconque des revendications 1 à 7, **caractérisé en ce qu'**il est réalisé dans une plage de température à laquelle les premiers signes d'une réaction au niveau d'un réactif ou de plusieurs réactifs individuels et/ou d'un produit ou de plusieurs produits individuels peuvent déjà être observés par ATD.

9. Procédé selon l'une quelconque des revendications 1 à 8, **caractérisé en ce qu'**une conversion de plus de 99 % par rapport au composé contenant une double liaison éthyléniquement insaturée est obtenue.

10. Prépolymères durcissables par rayonnement, contenant des groupes uréthane, qui ont été formés par un procédé selon la revendication 9, présentant une teneur résiduelle en NCO de 0 %.

11. Utilisation des prépolymères durcissables par rayonnement, contenant des groupes uréthane, selon la revendication 10 pour le revêtement d'articles.
